# EUROPEAN PATENT SPECIFICATION

(11) **EP 2 908 104 B1**
(45) Date of publication and mention of the grant of the patent: **09.06.2021**
(21) Application number: 13844854.3
(22) Date of filing: 20.09.2013
(51) Int. Cl.: G01F 1/68, G01F 1/696, G01P 5/10, G01F 1/684, G01F 15/04, G01P 21/00, G01P 5/12

(54) **THERMAL TYPE FLOWMETER AND METHOD FOR DETERMINING ABNORMALITY THEREOF**
THERMISCHER DURCHFLUSSMESSER UND VERFAHREN ZUM BESTIMMEN EINER ABNORMALITÄT DAVON
DÉBITMÈTRE DE TYPE THERMIQUE ET MÉTHODE POUR DÉTERMINER UNE ANOMALIE DE CELUI-CI

(30) Priority: 11.10.2012 JP 2012225821
(43) Date of publication of application: 19.08.2015
(73) Proprietor: Omron Corporation, Kyoto-shi, Kyoto 600-8530 (JP)
(72) Inventor: UEDA, Naotsugu, Kyoto-shi Kyoto 600-8530 (JP); FUKUMOTO, Masashige, Kyoto-shi Kyoto 600-8530 (JP); NAKAO, Hideyuki, Kyoto-shi Kyoto 600-8530 (JP)
(74) Representative: Kilian Kilian & Partner
(86) International application number: PCT/JP2013/075466
(87) International publication number: WO 2014/057790

(56) References cited:
- EP-A1- 1 698 864
- EP-A1- 1 965 179
- EP-A1- 1 972 906
- JP-A- H06 229 800
- JP-A- 2011 209 147
- JP-B2- 3 067 883
- JP-B2- H0 765 915
- US-A1- 2004 098 210

## Description

### TECHNICAL FIELD

The present invention relates to a thermal type flowmeter and a method for determining an abnormality thereof.

### BACKGROUND ART

There has been proposed a sensor chip measuring a flow rate of a fluid. For example, the sensor chip includes a semiconductor substrate constructed with a silicon substrate, a heater, and a pair of thermo-sensitive elements. One of the pair of thermo-sensitive elements is arranged on an upstream side of the flow passage with respect to the heater. The other thermo-sensitive element is arranged on a downstream side of the flow passage with respect to the heater.

When the fluid such as gas flows in the flow passage, heat generated by the heater is transmitted to the downstream-side thermo-sensitive element. Accordingly, a difference is generated between a voltage output from the upstream-side thermo-sensitive element and a voltage output from the downstream-side thermo-sensitive element. The flow rate of the fluid is calculated based on the difference voltage.

There has also been proposed a method for determining an abnormality of the sensor chip having the above configuration. For example, Japanese Unexamined Patent Publication No. 2000-321107 (Patent Document 1) discloses the following failure determination method. A resistance value of the upstream-side thermopile is calculated from the voltage at the upstream-side thermopile. A resistance value of the downstream-side thermopile is calculated from the voltage at the downstream-side thermopile. A failure of a flow sensor is determined when one of the resistance values is abnormal.

European patent publication EP1965179A1 (Patent Document 2) discloses a thermal flow sensor equipped with a self-test unit that monitors the device and generates a fault signal in the presence of a malfunction. The self-test unit can e.g. monitor the integrity of a membrane carrying the heater and temperature sensors, or it can monitor various operational parameters of the device, thereby increasing the safety of the device.

European patent publication EP1972906A1 (Patent Document 3) discloses a method involving measuring the quotient of the temperature under reference condition by two temperature sensors, where the measurement depending on one of the two determined temperatures or the determined mass flow, and stored in a memory. The quotient of the temperature is measured by both the temperature sensors, and from which the mass flow is determined in normal operation. The actual measured quotient differs from the stored quotients at the same mass flow from the corresponding reference measurement that is more than a predetermined tolerance.

### PRIOR ART DOCUMENTS

### PATENT DOCUMENT

Patent Document 1: Japanese Unexamined Patent Publication No. 2000-321107
Patent Document 2 : European patent publication EP1965179A1
Patent Document 3 : European patent publication EP1972906A1

### SUMMARY OF THE INVENTION

### PROBLEMS TO BE SOLVED BY THE INVENTION

Japanese Unexamined Patent Publication No. 2000-321107 proposes the method in which the resistance value of the thermopile is calculated as the method for detecting the failure of the flow sensor. Japanese Unexamined Patent Publication No. 2000-321107 discloses that the failure can be detected by the method in the case that dust adheres to the sensor.

However, generally the thermopile is covered with an insulating film. Accordingly, the resistance value of the thermopile does not change even if the dust adheres to a surface of the insulating film. That is, in the method disclosed in Japanese Unexamined Patent Publication No. 2000-321107, it is considered that only a damage or qualitative change of the thermopile can actually be detected.

In Japanese Unexamined Patent Publication No. 2000-321107, the heater is turned off in order to calculate the resistance value of the thermopile. That is, in order to determine the failure of the flowmeter, it is necessary to make a state different from a state in which the flow rate of the fluid is measured. Accordingly, it is necessary to interrupt the measurement of the flow rate of the fluid during the determination of the failure of the flowmeter. However, it is difficult to make a special state in which the failure of the flowmeter is determined while the flowmeter is usually used. Particularly, there is generated a problem in that the failure of the flowmeter cannot be determined in the case that constant measurement of the flow rate is demanded.

A method for keeping the flow rate of the fluid constant or a method for decreasing the flow rate to zero is also conceivable instead of turning of the heater. However, in this case, it is also necessary to make a state different from the state of the usual flow rate detection.

An object of the present invention is to provide a thermal type flowmeter that can determine the abnormality of the sensor element while detecting the flow rate of the fluid and an abnormality determination method thereof.

### MEANS FOR SOLVING THE PROBLEM

One aspect of the present invention provides a thermal type flowmeter. The thermal type flowmeter includes a sensor element, an output circuit, a storage unit, and an abnormality determination unit. The sensor element includes a heater arranged in a flow passage in which a fluid flows to heat the fluid, a first thermo-sensitive element arranged on an upstream side of the flow passage with respect to the heater, and a second thermo-sensitive element arranged on a downstream side of the flow passage with respect to the heater. The output circuit outputs a signal expressing a flow rate of the fluid based on a difference between a first output signal output from the first thermo-sensitive element and a second output signal output from the second thermo-sensitive element. A referential relationship defining a reference of a relationship between the first output signal and the second output signal is previously stored in the storage unit. The abnormality determination unit determines an abnormality concerning the first and second thermo-sensitive elements by comparing a relationship between the first output signal output from the first thermo-sensitive element and the second output signal output from the second thermo-sensitive element to the referential relationship.

Preferably the referential relationship is stored in the storage unit as one of a map defined by the first output signal and the second output signal, a table defined by the first output signal and the second output signal, and a function deriving one of the first output signal and the second output signal from the other.

Preferably the thermal type flowmeter further includes: a temperature sensor configured to detect an ambient temperature of the sensor element; and a correction unit configured to correct the referential relationship based on the ambient temperature of the sensor element, the ambient temperature of the sensor element being detected by the temperature sensor.

Preferably the thermal type flowmeter further includes: a temperature sensor configured to detect an ambient temperature of the sensor element; and a selector configured to select a relationship corresponding to the ambient temperature of the sensor element from plural referential relationships to provide the corresponding relationship to the abnormality determination unit, the ambient temperature of the sensor element being detected by the temperature sensor, each of the plural referential relationships being correlated with the ambient temperature of the sensor element. At this point, the storage unit includes the plural referential relationships as the referential relationship.

Preferably the thermal type flowmeter further includes a selector configured to receive a type of the fluid, to select a relationship corresponding to the type of the fluid from plural referential relationships, and to provide the corresponding relationship to the abnormality determination unit, each of the plural referential relationships being correlated with the type of the fluid. At this point, the storage unit includes the plural referential relationships as the referential relationship.

The abnormality determination unit determines that the abnormality concerning the first and second thermo-sensitive elements exists when a difference between one of the first output signal output from the first thermo-sensitive element and the second output signal output from the second thermo-sensitive element and a reference value derived from the referential relationship is out of a predetermined reference value. The abnormality determination unit generates the reference value by applying the other of the first output signal output from the first thermo-sensitive element and the second output signal output from the second thermo-sensitive element to the referential relationship.

Preferably the abnormality determination unit determines that the abnormality concerning the first and second thermo-sensitive elements exists, when a difference between the first output signal output from the first thermo-sensitive element and a first reference value is out of a predetermined acceptable range, and when a difference between the second output signal output from the second thermo-sensitive element and a second reference value is out of a predetermined acceptable range. The abnormality determination unit generates the first reference value by applying the second output signal output from the second thermo-sensitive element to the referential relationship, and generates the second reference value by applying the first output signal output from the first thermo-sensitive element to the referential relationship.

One aspect of the present invention provides a method for determining an abnormality of a thermal type flowmeter. The thermal type flowmeter includes a sensor element and an output circuit. The sensor element includes a heater arranged in a flow passage in which a fluid flows to heat the fluid, a first thermo-sensitive element arranged on an upstream side of the flow passage with respect to the heater, and a second thermo-sensitive element arranged on a downstream side of the flow passage with respect to the heater. The output circuit outputs a signal expressing a flow rate of the fluid based on a difference between a first output signal output from the first thermo-sensitive element and a second output signal output from the second thermo-sensitive element. The abnormality determination method includes the steps of: preparing a referential relationship defining a reference of a relationship between the first output signal and the second output signal; and determining the abnormality concerning the first and second thermo-sensitive elements by comparing a relationship between the first output signal output from the first thermo-sensitive element and the second output signal output from the second thermo-sensitive element to the referential relationship.

### EFFECT OF THE INVENTION

In the present invention, while the flow rate of the fluid is detected with the thermal type flowmeter, the abnormality of the sensor element included in the thermal type flowmeter can be determined.

### BRIEF DESCRIPTION OF THE DRAWINGS

Fig. 1 is a functional block diagram illustrating a schematic configuration of a thermal type flowmeter according to a first embodiment of the present invention.
Fig. 2 is a plan view illustrating a schematic configuration of a sensor element in Fig. 1.
Fig. 3 is a schematic sectional view of the sensor element in Fig. 2.
Fig. 4 is a graph illustrating an exemplary characteristic of an upstream-side thermopile.
Fig. 5 is a graph illustrating an exemplary characteristic of a downstream-side thermopile.
Fig. 6 is a graph illustrating a relationship between a voltage (flow rate output) output from an output circuit in Fig. 1 and a flow rate.
Fig. 7 is a view illustrating an example of a referential relationship between an output voltage of an upstream-side thermopile and an output voltage of a downstream-side thermopile.
Fig. 8 is a view illustrating a concept of an abnormal determination concerning the upstream-side thermopile and the downstream-side thermopile.
Fig. 9 is a schematic diagram illustrating a state in which dust adheres to a surface of a sensor element.
Fig. 10 is a flowchart illustrating thermopile abnormality determination processing of the first embodiment of the present invention.
Fig. 11 is a functional block diagram illustrating a schematic configuration of a thermal type flowmeter according to a second embodiment of the present invention.
Fig. 12 is a view illustrating an example of temperature dependence on a relationship between the output voltage of the upstream-side thermopile and the output voltage of the downstream-side thermopile.
Fig. 13 is a view illustrating a configuration example of data stored in a storage unit of Fig. 12.
Fig. 14 is a flowchart illustrating thermopile abnormality determination processing of the second embodiment of the present invention.
Fig. 15 is a functional block diagram illustrating a schematic configuration of a modification of the thermal type flowmeter of the second embodiment of the present invention.
Fig. 16 is a view illustrating a configuration example of data stored in a storage unit of Fig. 15.
Fig. 17 is a flowchart illustrating thermopile abnormality determination processing according to a modification of the second embodiment of the present invention.
Fig. 18 is a functional block diagram illustrating a schematic configuration of a thermal type flowmeter according to a third embodiment of the present invention.
Fig. 19 is a view illustrating a configuration example of data stored in a storage unit of Fig. 18.
Fig. 20 is a flowchart illustrating thermopile abnormality determination processing of the third embodiment of the present invention.
Fig. 21 is a view illustrating another configuration example of the thermal type flowmeter of the third embodiment of the present invention.
Fig. 22 is a view illustrating an application example of the thermal type flowmeter of each embodiment of the present invention.

### MODES FOR CARRYING OUT THE INVENTION

Hereinafter, exemplary embodiments of the present invention will be described in detail with reference to the drawings. In the drawings, the identical or equivalent component is designated by the identical symbol.

### [First embodiment]

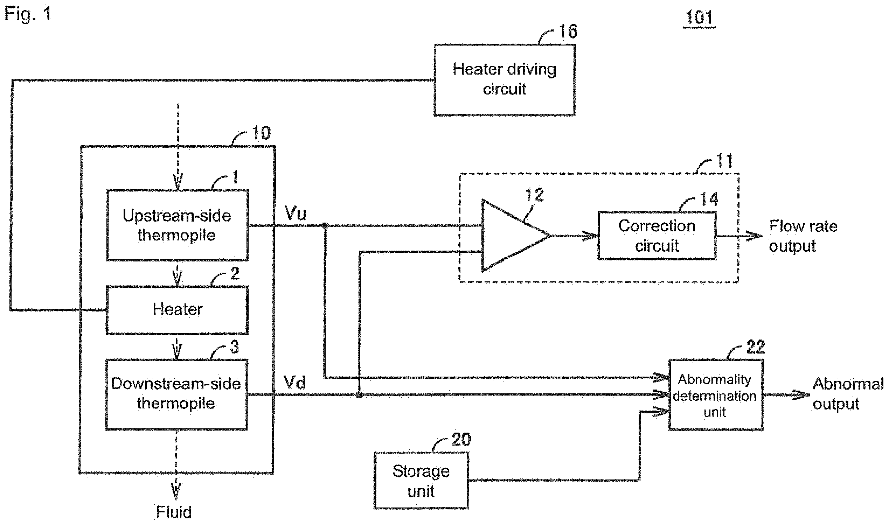

Fig. 1 is a functional block diagram illustrating a schematic configuration of a thermal type flowmeter according to a first embodiment of the present invention. Referring to Fig. 1, a thermal type flowmeter 101 of the first embodiment of the present invention includes a sensor element 10, an output circuit 11, a heater driving circuit 16, a storage unit 20, and an abnormality determination unit 22.

The sensor element 10 includes an upstream-side thermopile 1, a heater 2, and a downstream-side thermopile 3. Each of the upstream-side thermopile 1 and the downstream-side thermopile 3 is a thermo-sensitive element that outputs a voltage changing according to a temperature. A voltage Vu is output from the upstream-side thermopile 1. A voltage Vd is output from the downstream-side thermopile 3.

In Fig. 1, a direction in which a fluid flows is indicated by a dotted-line arrow. The upstream-side thermopile 1 is arranged on an upstream side of a flow passage with respect to the heater 2. The downstream-side thermopile 3 is arranged on a downstream side of the flow passage with respect to the heater 2.

The heater 2 is driven by the heater driving circuit 16 to generate heat. The fluid (such as gas) flowing in the flow passage is heated by the heater 2. The heater driving circuit 16 supplies a current to the heater 2 to drive the heater 2.

The output circuit 11 outputs a signal (flow rate output) expressing a flow rate based on a difference voltage between the output voltage Vu of the upstream-side thermopile 1 and the output voltage Vd of the downstream-side thermopile 3. The output circuit 11 includes a differential amplifier 12 and a correction circuit 14. The differential amplifier 12 amplifies the difference voltage between the output voltage Vu of the upstream-side thermopile 1 and the output voltage Vd of the downstream-side thermopile 3. The correction circuit 14 corrects an output voltage from the differential amplifier 12 to output a voltage changing according to the flow rate of the fluid. The correction circuit 14 is not always required. A configuration in which the correction circuit 14 is eliminated can be applied as the output circuit 11.

A referential relationship is previously stored in the storage unit 20. A reference of a relationship between the output voltage Vu of the upstream-side thermopile 1 and the output voltage Vd of the downstream-side thermopile 3 is defined in the referential relationship. For example, the "referential relationship" is stored in the storage unit 20 as a two-dimensional map defined by the output voltage Vu of the upstream-side thermopile 1 and the output voltage Vd of the downstream-side thermopile 3. However, a form of the "referential relationship" stored in the storage unit 20 is not limited to the map. For example, the "referential relationship" in the form of a table may be stored in the storage unit 20. In another form, the "referential relationship" may be stored in the storage unit 20 as a function in which one of the output voltages Vu and Vd is derived with the other as a variable.

The abnormality determination unit 22 receives the output voltage Vu of the upstream-side thermopile 1 and the output voltage Vd of the downstream-side thermopile 3. The abnormality determination unit 22 determines an abnormality concerning the upstream-side thermopile 1 and downstream-side thermopile 3 based on the referential relationship between the output voltages Vu and Vd, the output voltage Vu of the upstream-side thermopile 1, and the output voltage Vd of the downstream-side thermopile 3. The referential relationship between the output voltages Vu and Vd is stored in the storage unit 20.

For example, the abnormality determination unit 22 compares one (for example, voltage Vu) of the output voltage Vu of the upstream-side thermopile 1 and the output voltage Vd of the downstream-side thermopile 3 to a reference value thereof. The abnormality determination unit 22 derives the reference value by applying the other (for example, voltage Vd) of the output voltage Vu of the upstream-side thermopile 1 and the output voltage Vd of the downstream-side thermopile 3 to the referential relationship.

In the case that at least one of sensitivity of the upstream-side thermopile 1 and downstream-side thermopile 3 changes, for example, a difference between the actual voltage Vd and the reference value of the voltage Vd changes. Similarly, a difference between the actual voltage Vu and the reference value of the voltage Vu changes. In the case that one of these differences deviates from a predetermined acceptable range, the abnormality determination unit 22 determines that the abnormality concerning the upstream-side thermopile 1 and downstream-side thermopile 3 is generated. The acceptable range may be fixed or adjustable.

In the case that the abnormalities of the upstream-side thermopile 1 and downstream-side thermopile 3 are determined, the abnormality determination unit 22 outputs a signal (abnormal output) indicating the abnormality concerning the upstream-side thermopile 1 or downstream-side thermopile 3. For example, the abnormal output is transmitted to a circuit (not illustrated) that informs the abnormality of the thermal type flowmeter 101. The informing circuit is operated in response to the abnormal output. For example, the informing circuit is, but not limited to, an LED or a buzzer.

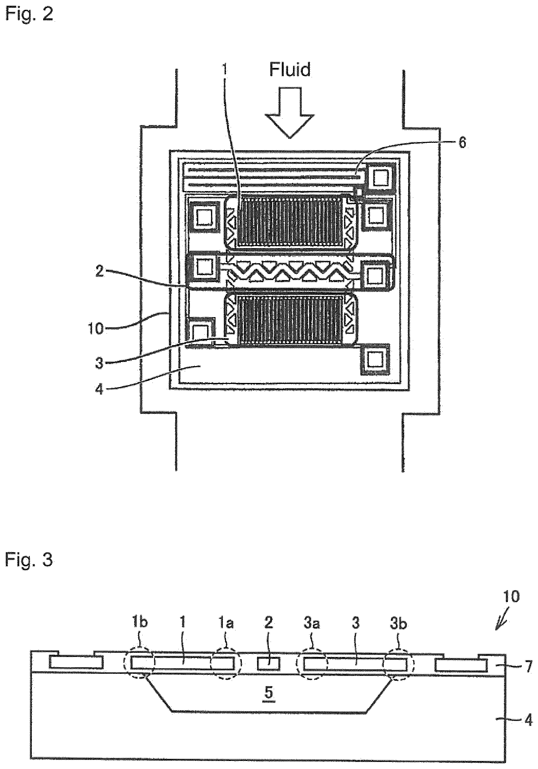

Fig. 2 is a plan view illustrating a schematic configuration of the sensor element 10 in Fig. 1. Fig. 3 is a schematic sectional view of the sensor element 10 in Fig. 2. Referring to Figs. 2 and 3, the sensor element 10 includes a silicon substrate 4 in which a cavity 5 is formed, the upstream-side thermopile 1, the heater 2, the downstream-side thermopile 3, and a temperature sensor 6. An insulating film 7 is formed on a surface of the silicon substrate 4. The upstream-side thermopile 1, the heater 2, the downstream-side thermopile 3, and the temperature sensor 6 are arranged in the insulating film 7.

Each of the upstream-side thermopile 1 and the downstream-side thermopile 3 is constructed with a thermocouple. For example, the thermocouple is constructed with a poly-silicon (p-Si) wire and an aluminum (Al) wire, which are connected to each other, and has a cold junction and a hot junction. A hot junction 1a of the upstream-side thermopile 1 and a hot junction 3a of the downstream-side thermopile 3 are arranged on the cavity 5. On the other hand, a cold junction 1b of the upstream-side thermopile 1 and a cold junction 3b of the downstream-side thermopile 3 are arranged on the silicon substrate 4. Because of high thermal conductivity of the silicon substrate 4, temperatures at the cold junctions 1b and 3b are identical to an ambient temperature of the sensor element 10. The ambient temperature of the sensor element 10 is equal to a temperature of the fluid before being heated by the heater 2.

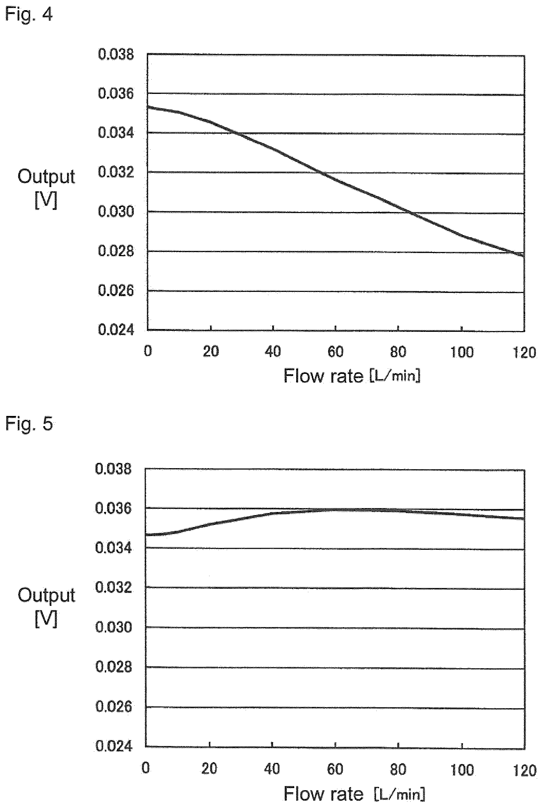

Fig. 4 is a graph illustrating an exemplary characteristic of the upstream-side thermopile 1. Fig. 5 is a graph illustrating an exemplary characteristic of the downstream-side thermopile 3. Referring to the graphs in Figs. 4 and 5, a horizontal axis indicates the flow rate of the fluid, and a vertical axis indicates the output voltage of the thermopile.

The upstream-side thermopile 1 detects a temperature of the fluid before being heated. The upstream-side thermopile 1 generates thermoelectric power between the cold junction 1b and the hot junction 1a by the heat of the fluid before being heated by the heater 2. Accordingly, the upstream-side thermopile 1 outputs the voltage Vu (see Fig. 1).

On the other hand, the heat generated by the heater 2 is transmitted to the downstream-side thermopile 3 with the fluid as a medium. The downstream-side thermopile 3 generates the thermoelectric power by a temperature difference between the hot junction 3a and cold junction 3b of the downstream-side thermopile 3. Accordingly, the downstream-side thermopile 3 generates the voltage Vd (see Fig. 1).

Because a thermal distribution around the heater 2 becomes symmetric at the flow rate of zero, the voltages Vu and Vd are equal to each other. When the fluid flows, the symmetry of the thermal distribution around the heater 2 collapses. Therefore, the difference is generated between the voltages Vu and Vd as illustrated in Figs. 4 and 5. The difference between the voltages Vu and Vd changes depending on the flow rate of the fluid.

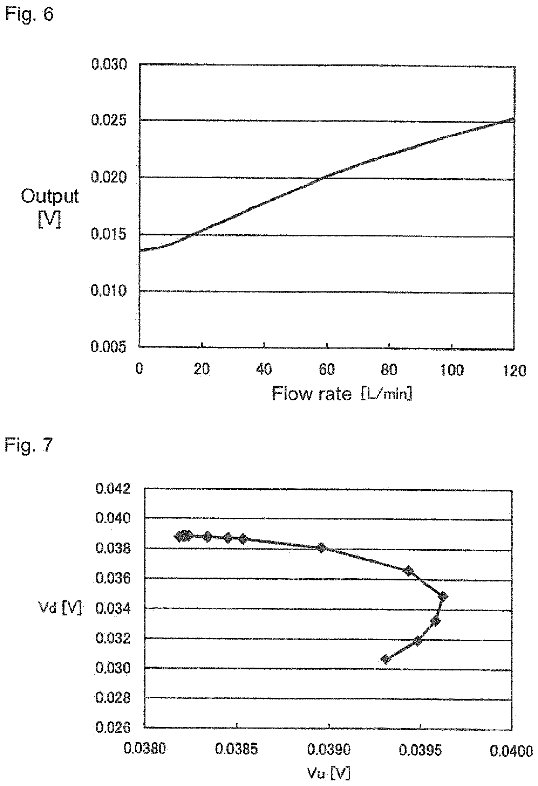

Fig. 6 is a graph illustrating a relationship between the voltage (flow rate output) output from the output circuit 11 in Fig. 1 and the flow rate. Referring to Fig. 6, the voltage (flow rate output) from the output circuit changes depending on the flow rate of the fluid. Accordingly, the flow rate of the fluid can be understood by detecting the voltage of the flow rate output.

A method for determining the abnormality of the thermal type flowmeter of the first embodiment of the present invention will be described in detail below. Fig. 7 is a view illustrating an example of the referential relationship between the output voltage Vu of the upstream-side thermopile 1 and an output voltage Vd of the downstream-side thermopile 3. Referring to Fig. 7, the voltages Vu and Vd change depending on the flow rate of the fluid.

For example, the referential relationship between the voltages Vu and Vd in Fig. 7 is previously stored in the storage unit 20 as a map. For example, the map stored in the storage unit 20 is previously fixed by measurement with the sensor element of a reference. Therefore, the referential relationship between the voltages Vu and Vd is previously prepared.

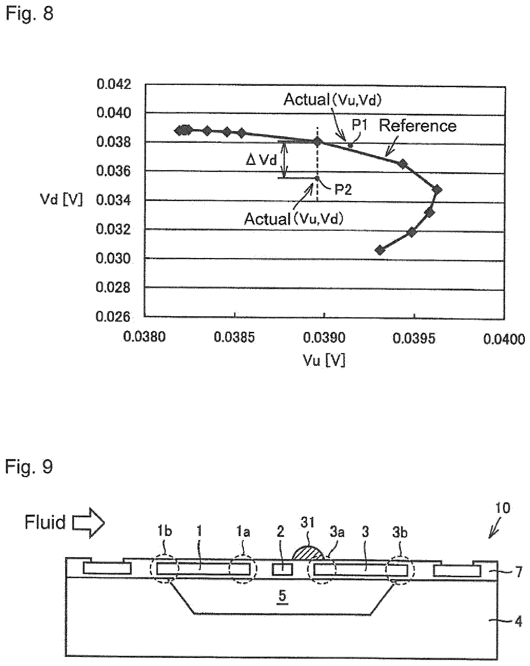

Fig. 8 is a view illustrating a concept of the abnormal determination concerning the upstream-side thermopile and the downstream-side thermopile. Referring to Fig. 8, the referential relationship between the voltages Vu and Vd is defined in the map as a curve (hereinafter, referred to as a "reference curve"). Each of points P1 and P2 plotted in the map indicates the actual output voltage (Vu,Vd).

The point P1 is located relatively close to the reference curve. In this case, the upstream-side thermopile 1 and the downstream-side thermopile 3 are determined to be normal. On the other hand, the point P2 is located away from the reference curve with respect to the point P1.

A difference ΔVd indicates a difference between the actual voltage Vd and the voltage Vd (reference value) on the reference curve. In the case that the difference ΔVd deviates from a predetermined acceptable range, the abnormality concerning the upstream-side thermopile 1 and the downstream-side thermopile 3 is determined.

The abnormal determination is attributed to the change in sensitivity of the thermopile. For example, in the case that a foreign substance (such as dust and mist) included in the fluid adheres to the surface of the sensor element 10, the sensitivity of the upstream-side thermopile 1 or downstream-side thermopile 3 can change.

Fig. 9 is a schematic diagram illustrating the state in which the dust adheres to the surface of the sensor element. Referring to Fig. 9, dust 31 included in the fluid adheres to a surface of the insulating film 7. The dust 31 is located on the downstream-side thermopile 3 (for example, on the hot junction 3a). The conduction of the heat generated by the heater 2 is changed by the dust 31. For example, the heat conducts easily to the hot junction 3a of the downstream-side thermopile 3 through the dust 31. Therefore, the output voltage Vd of the downstream-side thermopile 3 changes.

In such cases, as illustrated in Fig. 8, the point indicating the actual output voltage (Vu, Vd) is located out of the reference curve. Accordingly, the abnormality concerning the sensitivity of the thermopile can be detected.

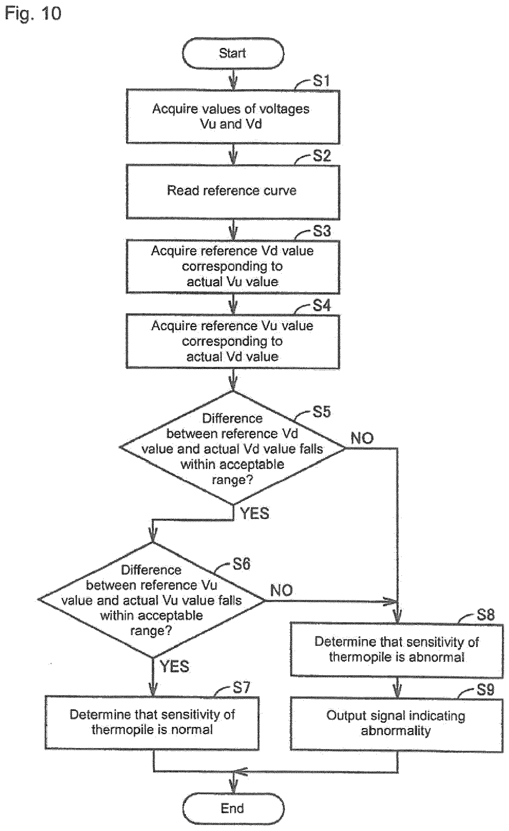

Fig. 10 is a flowchart illustrating the thermopile abnormality determination processing of the first embodiment of the present invention. For example, the abnormality determination unit 22 repeatedly performs the processing of the flowchart in Fig. 10 in a constant period.

Referring to Fig. 10, in Step S1, the abnormality determination unit 22 acquires values of the output voltage Vu of the upstream-side thermopile 1 and the output voltage Vd of the downstream-side thermopile 3. For example, the abnormality determination unit 22 receives the voltages Vu and Vd, and performs A/D conversion on the voltages Vu and Vd. Therefore, the abnormality determination unit 22 acquires values of voltages Vu and Vd. Hereinafter, the acquired values of the voltages Vu and Vd are referred to as an "actual Vu value" and an "actual Vd value".

In Step S2, the abnormality determination unit 22 reads the reference curve (see Fig. 7) in which the relationship between the voltages Vu and Vd is defined from the storage unit 20.

In Step S3, the abnormality determination unit 22 acquires an on-reference-curve Vd value corresponding to the actual Vu value. Hereinafter, the Vd value is referred to as a "reference Vd value".

In Step S4, the abnormality determination unit 22 acquires an on-reference-curve Vu value corresponding to the actual Vd value. Hereinafter, the Vu value is referred to as a "reference Vu value".

In Step S5, the abnormality determination unit 22 compares the reference Vd value to the actual Vd value. Specifically, the abnormality determination unit 22 determines whether a difference between the reference Vd value and the actual Vd value falls within a predetermined acceptable range. The term of "the difference between the reference Vd value and the actual Vd value" corresponds to the difference ΔVd in Fig. 8.

When the difference ΔVd falls within the acceptable range (YES in Step S5), the processing goes to Step S6. On the other hand, when the difference ΔVd is out of the acceptable range (NO in Step S5), the processing goes to Step S8.

In Step S6, the abnormality determination unit 22 compares the reference Vu value to the actual Vu value. Similarly to the processing in Step S5, the abnormality determination unit 22 determines whether a difference between the reference Vu value and the actual Vu value falls within a predetermined acceptable range.

When the difference between the reference Vu value and the actual Vu value falls within the acceptable range (YES in Step S6), the processing goes to Step S7. On the other hand, when the difference between the reference Vu value and the actual Vu value is out of the acceptable range (NO in Step S6), the processing goes to Step S8.

In Step S7, the abnormality determination unit 22 determines that the sensitivities of the upstream-side thermopile 1 and downstream-side thermopile 3 are normal. That is, the abnormality determination unit 22 determines that the sensitivities of the upstream-side thermopile 1 and downstream-side thermopile 3 are not abnormal.

In the case that the actual Vu value and the actual Vd value are expressed as the point P1 in Fig. 8, both the difference between the reference Vu value and the actual Vu value and the difference between the reference Vd value and the actual Vd value fall within the acceptable range. Accordingly, in this case, both the sensitivities of the upstream-side thermopile 1 and downstream-side thermopile 3 are determined to be normal.

On the other hand, in Step S8, the abnormality determination unit 22 determines that the sensitivity of at least one of the upstream-side thermopile 1 and the downstream-side thermopile 3 is abnormal. In the case that the actual Vu value and the actual Vd value are expressed as the point P2 in Fig. 8, for example, the difference between the reference Vd value and the actual Vd value is out of the acceptable range. The difference between the reference Vu value and the actual Vu value is also out of the acceptable range. Accordingly, in this case, the sensitivity of at least one of the upstream-side thermopile 1 and the downstream-side thermopile 3 is determined to be abnormal.

In Step S9, the abnormality determination unit 22 outputs a signal (abnormal output) indicating the abnormality of the thermopile.

The sequence of the pieces of processing is not limited to the sequence in Fig. 10, but some pieces of sequence may properly be replaced. The plural pieces of processing may concurrently be performed.

In the flowchart of Fig. 10, both the actual Vu value and the actual Vd value are determined only once. Alternatively, for example, in the case that the abnormality of the actual Vu value is determined (the difference between the actual Vu value and the reference Vu value is out of the acceptable range), the actual Vu value may repeatedly be determined. The abnormality determination unit 22 may determine that the sensitivity of the thermopile is abnormal in the case that the determination result indicating the abnormality is continuously generated plural times.

A set of the actual Vu value and the actual Vd value is acquired plural times, and plural points may be plotted on the map. For example, the abnormal concerning sensitivity of the thermopile can be determined based on a distribution of the plural points.

As described above, in the first embodiment of the present invention, the thermal type flowmeter 101 detects the abnormality of the upstream-side thermopile 1 or downstream-side thermopile 3 by comparing the relationship between the output voltage Vu of the upstream-side thermopile 1 and the output voltage Vd of the downstream-side thermopile 3 to the referential relationship defined by the reference curve. In the first embodiment of the present invention, the abnormality of the thermopile can be determined without the necessity to make the state different from the flow rate detection state such that the heater is turned off. Accordingly, in the first embodiment of the present invention, the abnormality of the thermopile can be determined while the flow rate of the fluid is detected.

For example, in the case that the heater is turned off in order to determine the abnormality of the thermopile, it is necessary to wait for starting of determination processing until a thermal equilibrium state is obtained. Additionally, in the case that the heater is turned on, it is necessary to wait for the detection of flow rate until the thermal equilibrium state is obtained. On the other hand, in the first embodiment of the present invention, the abnormality of the thermopile can be determined without the necessity to wait for the thermal equilibrium state after the turn-on and -off of the heater. As illustrated in Fig. 1, in the first embodiment of the present invention, the usual flow rate detection processing and the abnormality determination processing can concurrently be performed using the output voltage Vu of the upstream-side thermopile 1 and the output voltage Vd of the downstream-side thermopile 3. Accordingly, time necessary for the determination processing can be shortened.

The abnormality can continuously be determined because the time necessary for the determination processing can be shortened. For example, the abnormality of the thermopile is determined in the case that the abnormal determination result is continuously generated plural times as described above. Therefore, a false determination due to an instantaneous malfunction caused by a noise can also be prevented.

For example, the continuously-obtained determination result may be stored in the storage unit 20 or a higher-level processor. For example, a failure cause can be estimated by measuring the output voltage Vu of the upstream-side thermopile 1 and the output voltage Vd of the downstream-side thermopile 3 after the failure.

In the first embodiment of the present invention, the abnormality due to the adhesion of the foreign substance, such as dust and oil, to the sensor element can be detected by detecting the change in sensitivity of the thermopile. For example, the sensitivity of the thermopile changes in the case that the thermopile is degraded or damaged. Accordingly, the abnormality due to the degradation or damage of the thermopile can also be detected.

### [Second embodiment]

A second embodiment provides a thermal type flowmeter that can determine the abnormality of the thermopile even if the temperature of the fluid changes.

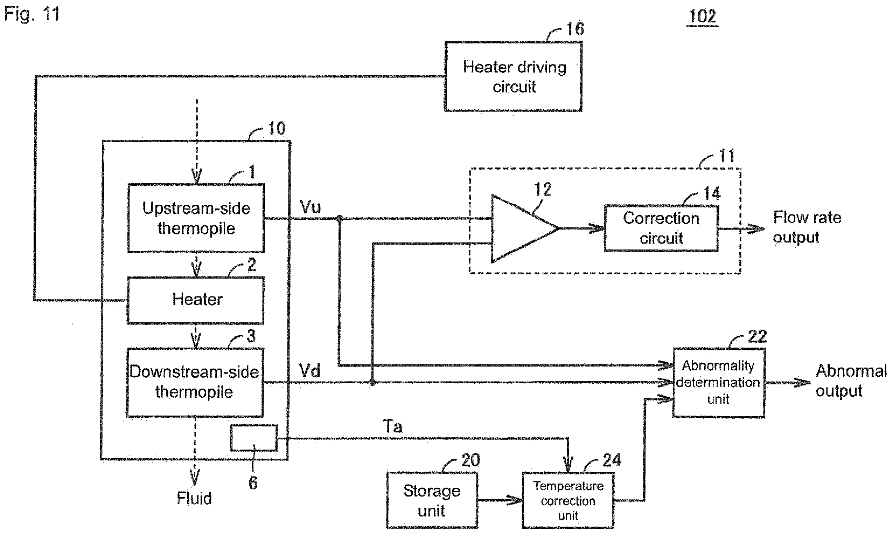

Fig. 11 is a functional block diagram illustrating a schematic configuration of a thermal type flowmeter according to the second embodiment of the present invention. Referring to Fig. 11, a thermal type flowmeter 102 of the second embodiment differs from the thermal type flowmeter 101 in Fig. 1 in that the thermal type flowmeter 102 further includes a temperature correcting circuit 24 (see Fig. 1).

The sensor element 10 includes the temperature sensor 6 (see Fig. 2). The temperature sensor 6 measures the ambient temperature of the sensor element 10, and outputs a signal indicating a measured temperature Ta to the temperature correcting circuit 24.

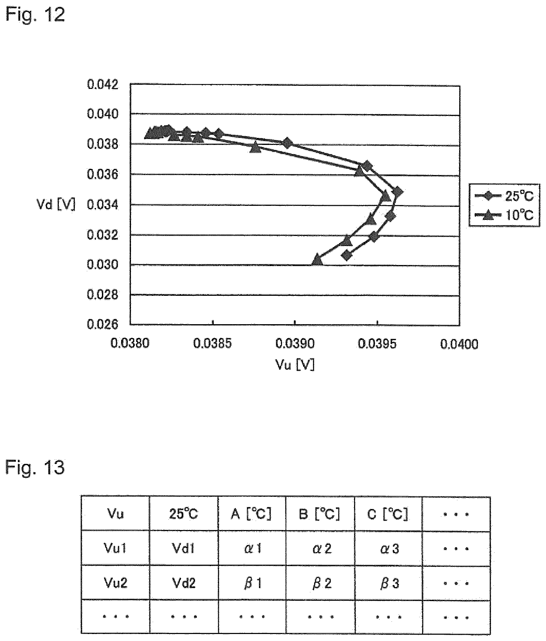

The temperature correcting circuit 24 reads the referential relationship between the output voltage Vu of the upstream-side thermopile 1 and the output voltage Vd of the downstream-side thermopile 3 from the storage unit 20, and corrects the "referential relationship" based on the temperature Ta measured by the temperature sensor 6. The abnormality determination unit 22 compares the relationship between the output voltages Vu and Vd to the corrected referential relationship to determine whether at least one of the upstream-side thermopile 1 and the downstream-side thermopile 3 is abnormal. Because other components of the configuration in Fig. 12 are identical to those in Fig. 1, the description is omitted.

Fig. 12 is a view illustrating an example of temperature dependence on the relationship between the output voltage Vu of the upstream-side thermopile 1 and the output voltage Vd of the downstream-side thermopile 3. Referring to Fig. 12, the relationship between the voltages Vu and Vd changes depending on the ambient temperature Ta of the sensor element 10. Accordingly, in the second embodiment, the referential relationship stored in the storage unit 20 is corrected according to the ambient temperature Ta of the sensor element 10. There is no particular limitation in the correction method. For example, the referential relationship between the voltages Vu and Vd can be corrected by adopting the following method.

Fig. 13 is a view illustrating a configuration example of the data stored in the storage unit 20 of Fig. 12. Referring to Fig. 13, for example, when the reference temperature is set to 25°C, values (Vu1, Vd1, Vu2, Vd2, ···) of the voltages Vu and Vd are stored in the storage unit 20. The reference curve at the reference temperature is defined by the values of the voltages Vu and Vd. Correction factors (α1, α2, a3, β1, β2, β3, ···) for the voltage Vd at temperature (A[°C], B[°C], C[°C], ···) different from the reference temperature are stored in the storage unit 20.

Based on the detected ambient temperature Ta, the temperature correcting circuit 24 fixes the correction factor corresponding to each value of the voltage Vd stored in the storage unit 20. The temperature correcting circuit 24 multiplies the value of the voltage Vd stored in the storage unit 20 by the correction factor. Therefore, the referential relationship between the voltages Vu and Vd is corrected. In other words, the reference curve is corrected.

There is a possibility that the ambient temperature Ta detected by the temperature sensor 6 is not matched with any temperature stored in the storage unit 20. In such cases, for example, the temperature correcting circuit 24 generates the correction factor using interpolation. There is no particular limitation in the interpolation method, but various well-known methods can be adopted.

In Fig. 13, the correction factor is set to the value of the voltage Vd. However, the setting of the correction factor is not limited to the value of the voltage Vd. The correction factor may be set to each value of the voltage Vu. That is, a configuration in which the voltage Vu is replaced with the voltage Vd in the data configuration of Fig. 13 can be applied to the second embodiment of the present invention.

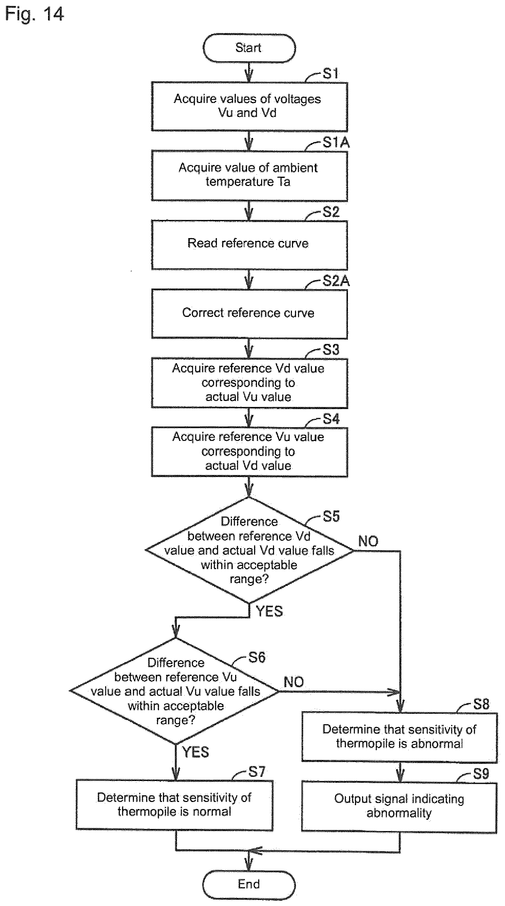

Fig. 14 is a flowchart illustrating thermopile abnormality determination processing of the second embodiment of the present invention. Referring to Figs. 10 and 14, the abnormality determination processing of the second embodiment of the present invention differs from the abnormality determination processing of the first embodiment in that pieces of processing in Steps S1A and S2A are added. In the second embodiment, the pieces of processing in Steps S1A, S2A, and S2 are performed by the temperature correcting circuit 24.

For example, the processing in Step S1 is followed by the processing in Step S1A. In Step S1A, the temperature correcting circuit 24 acquires the value of the ambient temperature Ta of the sensor element 10 from the temperature sensor 6.

In Step S2, the temperature correcting circuit 24 reads the reference curve from the storage unit 20. In Step S2A, the temperature correcting circuit 24 corrects the reference curve according to the above method.

Because the pieces of processing in other steps of the abnormality determination processing are identical to those of the first embodiment, the detailed description is omitted. In the second embodiment of the present invention, the reference Vd value obtained in Step S3 and the reference Vu value obtained in Step S4 are corrected values (values on the corrected reference curve).

For example, there is a possibility that the ambient temperature of the sensor element 10 changes in the case that the temperature of the fluid changes. There is a possibility that the abnormality of the thermopile cannot correctly be detected in the case that the sensitivity of the thermopile changes depending on the change in ambient temperature. In the second embodiment of the present invention, the referential relationship stored in the storage unit 20 is corrected according to the ambient temperature of the sensor element 10. Accordingly, in the second embodiment of the present invention, the abnormality of the thermopile can correctly be determined even if the ambient temperature of the sensor element 10 changes. For example, the ambient temperature of the sensor element 10 can change depending on the change in temperature of the fluid. In the second embodiment of the present invention, even in such cases, the abnormality of the thermopile can correctly be detected.

### (Modifications)

As illustrated in Fig. 12, the reference curve indicating the relationship between the voltages Vu and Vd varies depending on the ambient temperature. Accordingly, plural reference curves corresponding to different temperatures may be stored in the storage unit 20.

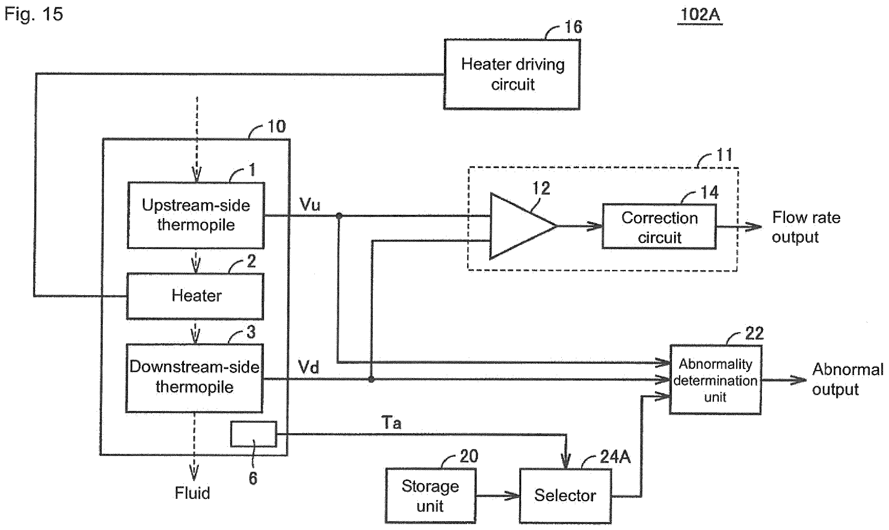

Fig. 15 is a functional block diagram illustrating a schematic configuration of a modification of the thermal type flowmeter of the second embodiment of the present invention. Referring to Figs. 11 and 15, a thermal type flowmeter 102A differs from the thermal type flowmeter 102 in that the thermal type flowmeter 102A includes a selector 24A instead of the temperature correcting circuit 24. Because other configurations of the thermal type flowmeter 102A are similar to those of the thermal type flowmeter 102, the overlapping description is omitted.

As described above, the plural reference curves corresponding to different temperatures are stored in the storage unit 20. The selector 24A selects the reference curve corresponding to the ambient temperature Ta from the plural reference curves based on the ambient temperature Ta detected by the temperature sensor 6. The reference curve selected by the selector 24A is provided to the abnormality determination unit 22.

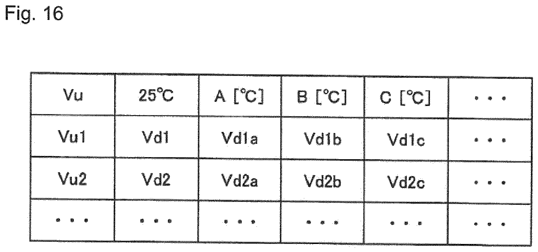

Fig. 16 is a view illustrating a configuration example of the data stored in the storage unit 20 of Fig. 15. Referring to Fig. 16, the value of the voltage Vd corresponding to the voltage Vu is defined at each temperature. The reference curve is defined at each temperature by plural sets of (Vu,Vd) at each temperature. In the case that the ambient temperature Ta detected by the temperature sensor 6 is located between A[°C] and B[°C], for example, the selector 24A may select one of the reference curve of A[°C] and the reference curve of B[°C] (for example, the reference curve at the temperature closer to the measured temperature is selected).

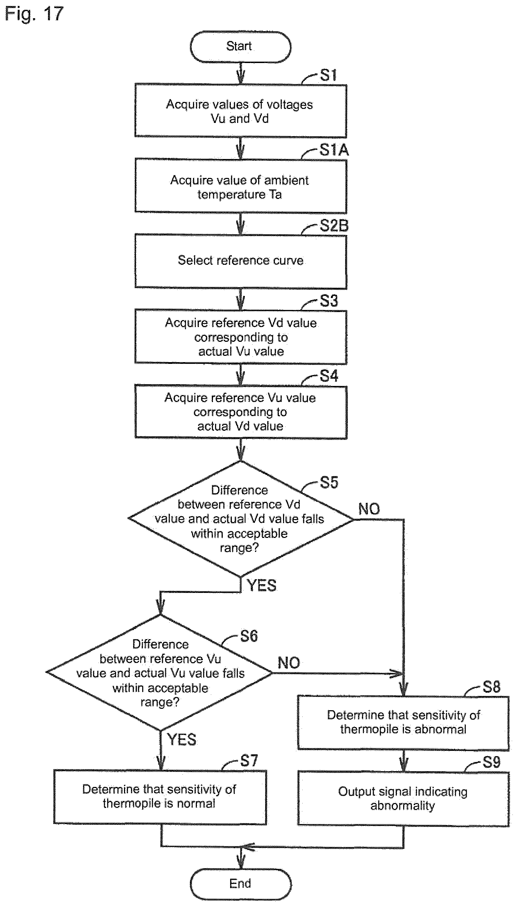

Fig. 17 is a flowchart illustrating thermopile abnormality determination processing according to a modification of the second embodiment of the present invention. Referring to Figs. 14 and 17, in the abnormality determination processing of the modification, processing in Step S2B is performed instead of the pieces of processing in Steps S2A and S2. In Step S2B, the selector 24A selects the reference curve corresponding to the ambient temperature Ta from the plural reference curves stored in the storage unit 20. Because the pieces of processing in other steps are similar to those in Fig. 10 or 14, the overlapping description is omitted.

In the configuration, the referential relationship is selected according to the ambient temperature of the sensor element 10. Accordingly, the abnormality of the thermopile can correctly be determined even if the ambient temperature of the sensor element 10 changes.

The temperature correcting circuit 24 may be provided at a stage subsequent to the selector 24A. In this case, the temperature correcting circuit 24 corrects the reference curve selected by the selector 24A according to the ambient temperature Ta. The post-correction reference curve is provided to the abnormality determination unit 22. Even by the configuration, the abnormality of the thermopile can correctly be determined irrespective of the change in ambient temperature.

### [Third embodiment]

A third embodiment provides a thermal type flowmeter that can determine the abnormality of the thermopile in the case that a flow speed of a different type of fluid is measured.

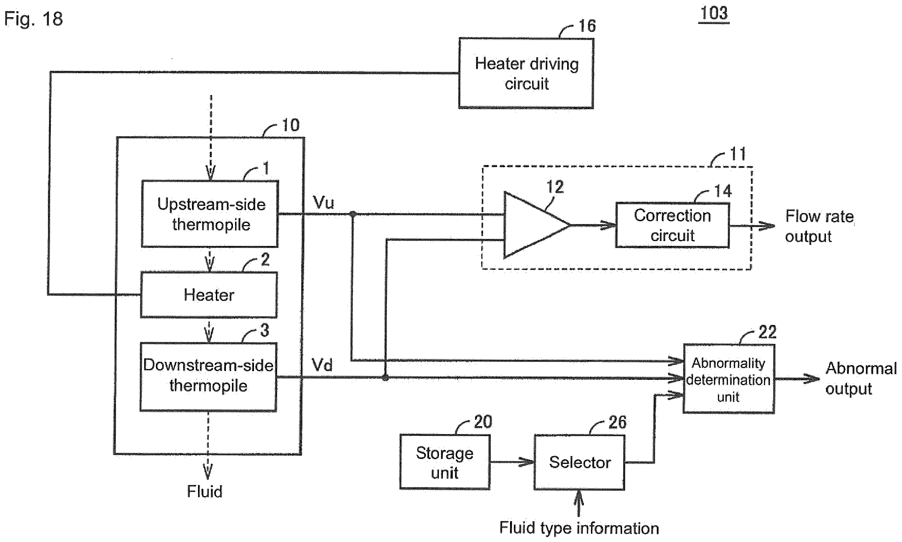

Fig. 18 is a functional block diagram illustrating a schematic configuration of a modification of the thermal type flowmeter of the third embodiment of the present invention. Referring to Figs. 1 and 18, a thermal type flowmeter 103 differs from the thermal type flowmeter 101 in that the thermal type flowmeter 103 further includes a selector 26. Because other configurations of the thermal type flowmeter 103 are similar to those of the thermal type flowmeter 101, the overlapping description is omitted.

Plural reference curves corresponding to the different types of fluids are stored in the storage unit 20. The selector 26 receives fluid type information on the type of the fluid. The selector 26 selects the reference curve corresponding to the fluid indicated by the fluid type information from the plural reference curves.

There is no particular limitation in a method for providing the fluid type information to the selector 26. For example, the fluid type information may be provided to the selector 26 from an outside of the thermal type flowmeter 103. Alternatively, a signal indicating the fluid type information may be generated by a component such as a switch.

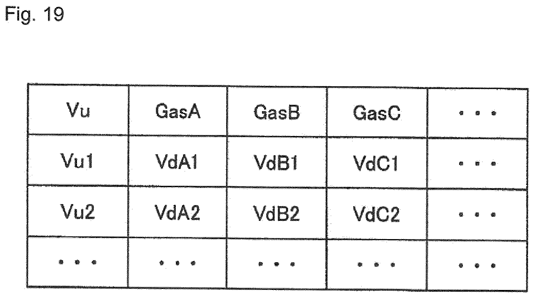

Fig. 19 is a view illustrating a configuration example of the data stored in the storage unit 20 of Fig. 18. Referring to Fig. 19, plural types of gases (for example, gases GasA, GasB, GasC, ···) are defined as the liquid. The value of the voltage Vd corresponding to the voltage Vu is defined in each type of the gas. The reference curve is defined in each type of the gas by the plural sets of (Vu,Vd) defined in each type of the gas.

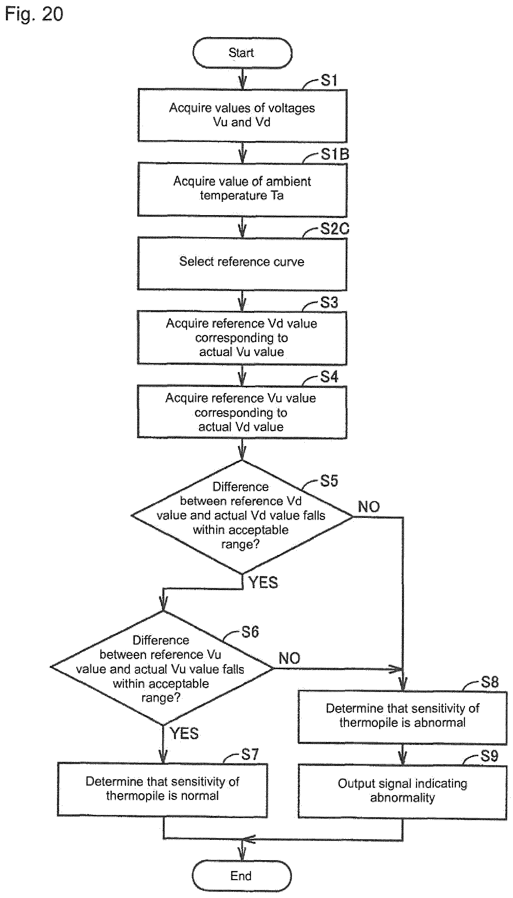

Fig. 20 is a flowchart illustrating thermopile abnormality determination processing of the third embodiment of the present invention. Referring to Figs. 10 and 20, the processing in Step S1B following the processing in Step S1 is performed in the abnormality determination processing of the third embodiment of the present invention. The processing in Step S2C is performed instead of the processing in Step S2.

In Step S1B, the selector 26 receives the fluid type information. Therefore, the selector 26 acquires the information on the type of the fluid. In Step S2C, the selector 26 selects the reference curve corresponding to the fluid type from the plural reference curves stored in the storage unit 20. Because the pieces of processing in other steps are similar to those in Fig. 10, the overlapping description is omitted.

In the third embodiment of the present invention, the same effect as the first embodiment of the present invention can be obtained. Particularly, in the third embodiment of the present invention, the abnormality of the thermopile can be determined even if the fluid type varies.

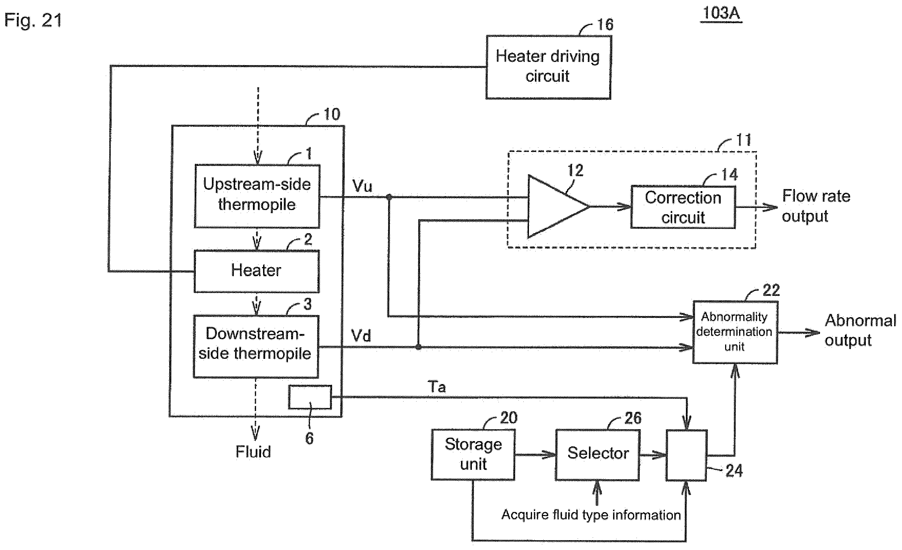

The third embodiment of the present invention and the second embodiment of the present invention may be combined with each other. Fig. 21 is a view illustrating another configuration example of the thermal type flowmeter of the third embodiment of the present invention. Referring to Figs. 18 and 21, the thermal type flowmeter 103A further includes a temperature correcting circuit 24. The temperature correcting circuit 24 corrects the reference curve selected by the selector 26 according to the ambient temperature Ta.

In addition to the data in Fig. 19, a correction factor at each temperature is stored in the storage unit 20 according to each fluid type. The temperature correcting circuit 24 reads the correction factor from the storage unit 20 to correct the reference curve. In the configuration, the abnormality concerning the sensitivity of the thermopile can be determined even if the fluid type or the temperature varies.

### (Application example)

The thermal type flowmeter of each embodiment of the present invention can be used to measure the fluid in both commercial use and industrial use. The thermal type flowmeter of each embodiment can be used in, for example, gas flow rate measurement or differential pressure measurement of a gas meter and a gas boiler.

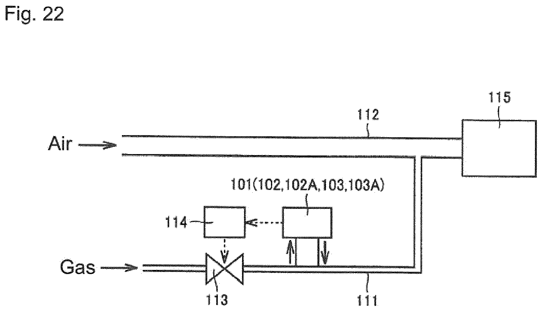

Fig. 22 is a view illustrating an application example of the thermal type flowmeter of each embodiment of the present invention. Referring to Fig. 22, the thermal type flowmeter 101 is provided in a gas line 111 to detect the flow rate of gas (gas fuel) flowing in the gas line 111. The gas flowing in the gas line 111 is delivered to a combustion device 115 while joining air flowing in the air line 112. One of thermal type flowmeters 102, 102A, 103, and 103A may be used instead of the thermal type flowmeter 101.

A control valve 113 is provided in the gas line 111 in order to adjust the flow rate of the gas. Using the control valve 113, a control device 114 controls the flow rate of the gas such that the flow rate of the gas becomes optimum (for example, an optimum air-fuel ratio is obtained). The control device 114 controls the control valve 113 in response to the signal (flow rate output) from the thermal type flowmeter 101. For example, the thermal type flowmeter 101 may be arranged so as to detect a differential pressure between a pressure of the gas flowing in the gas line 111 and an atmospheric pressure or a differential pressure between the pressure of the gas flowing in the gas line 111 and a pressure of the air flowing in the air line 112.

In each of the above embodiments, the sensor element in which the thermopile is used as the thermo-sensitive element is illustrated. However, the thermo-sensitive element is not limited to the thermopile as long as the thermo-sensitive element is an element that changes the output voltage according to the temperature. For example, a thermistor can be used as the thermo-sensitive element.

In each of the above embodiments, the output voltage of the thermo-sensitive element (thermopile) is used as the output signal output from the thermo-sensitive element (thermopile). However, a mode in which the output current of the thermo-sensitive element is used as the output signal output from the thermo-sensitive element can be included in the embodiment of the present invention. In the mode, the "output voltage" in each of the embodiments is replaced with the "output current", the "referential relationship" is replaced with the relationship between the output current of the upstream-side thermo-sensitive element and the output current of the downstream-side thermo-sensitive element. Therefore, the abnormality concerning the sensitivities of the upstream-side thermo-sensitive element and downstream-side thermo-sensitive element can be detected. The output circuit may amplify the difference between an output current of the upstream-side thermo-sensitive element and an output current of the downstream-side thermo-sensitive element, and output a signal expressing the flow rate of the fluid. Alternatively, the output circuit may convert the output current of each thermo-sensitive element into the voltage, amplify the difference between the two voltages, and output a signal expressing the flow rate of the fluid.

In the flowcharts of Figs. 10, 14, 17, and 20, the determination that the upstream-side thermopile 1 and the downstream-side thermopile 3 are abnormal is made, when the difference between one of the voltage Vu output from the upstream-side thermopile 1 and the voltage Vd output from the downstream-side thermopile 3 and the reference value (reference Vu value or reference Vd value) derived from the referential relationship is out of the predetermined acceptable range (NO in Step S5 or NO in Step S6). Alternatively, the abnormality determination unit 22 may determine that the sensitivities of the upstream-side thermopile 1 and downstream-side thermopile 3 are abnormal, when the difference between the actual Vu value and the reference Vu value (first reference value) is out of the predetermined acceptable range, and when the difference between the actual Vd value and the reference Vd value (second reference value) is out of the predetermined acceptable range.

It is noted that the disclosed embodiments are not restrictive but illustrative in every way. The scope of the present invention is not indicated by the above description but by the claims.

### DESCRIPTION OF SYMBOLS

- 1: upstream-side thermopile
- 1a,3a: hot junction
- 1b,3b: cold junction
- 2: heater
- 3: downstream-side thermopile
- 4: silicon substrate
- 5: cavity
- 6: temperature sensor
- 7: insulating film
- 10: sensor element
- 11: output circuit
- 12: differential amplifier
- 14: correction circuit
- 16: heater driving circuit
- 20: storage unit
- 22: abnormality determination unit
- 24: temperature correcting circuit
- 24A, 26: selector
- 31: dust
- 101, 102, 102A, 103, 103A: thermal type flowmeter
- 111: gas line
- 112: air line
- 113: control valve
- 114: control device
- 115: combustion device
- P1 ,P2: point

## Claims

1. A thermal type flowmeter (101, 102, 102A, 103, 103A) comprising:
a sensor element (10) comprising a heater (2), a first thermo-sensitive element (1), and a second thermo-sensitive element (3), the heater (2) being arranged in a flow passage in which a fluid flows to heat the fluid, the first thermo-sensitive element (1) being arranged on an upstream side of the flow passage with respect to the heater (2), the second thermo-sensitive element (3) being arranged on a downstream side of the flow passage with respect to the heater (2);
an output circuit (11) configured to output a signal expressing a flow rate of the fluid based on a difference between a first output signal (Vu) output from the first thermo-sensitive element (1) and a second output signal (Vd) output from the second thermo-sensitive element (3);
a storage unit (20) in which a referential relationship is previously stored, the referential relationship defining a reference of a relationship between the first output signal (Vu) and the second output signal (Vd); and
an abnormality determination unit (22) configured to determine an abnormality concerning the first and second thermo-sensitive elements by comparing a relationship between the first output signal (Vu) output from the first thermo-sensitive element (1) and the second output signal (Vd) output from the second thermo-sensitive element (3) to the referential relationship;
wherein the abnormality determination unit (22) is configured to determine whether a first difference between the first output signal (Vu) output from the first thermo-sensitive element (1) and a first reference value derived from the referential relationship is out of a first predetermined acceptable range and/or whether a second difference between the second output signal (Vd) output from the second thermo-sensitive element (3) and a second reference value derived from the referential relationship is out of a second predetermined acceptable range, and
wherein the abnormality determination unit (22) is configured to determine, in case one of the first or second difference is within said one respective predetermined acceptable range, whether said other one of the first or second difference is out of said other respective predetermined acceptable range,
wherein the abnormality determination unit (22) determines that the abnormality concerning the first and second thermo-sensitive elements exists when the first difference is out of the first predetermined acceptable range and/or when the second difference is out of the second predetermined acceptable range, and
wherein the abnormality determination unit (22) generates the first reference value by applying the second output signal (Vd) output from the second thermo-sensitive element (3) to the referential relationship, and
the abnormality determination unit (22) generates the second reference value by applying the first output signal (Vu) output from the first thermo-sensitive element (1) to the referential relationship.

2. The thermal type flowmeter (101, 102, 102A, 103, 103A) according to claim 1, wherein the referential relationship is stored in the storage unit (20) as one of a map defined by the first output signal (Vu) and the second output signal (Vd), a table defined by the first output signal (Vu) and the second output signal (Vd), and a function deriving one of the first output signal (Vu) and the second output signal (Vd) from the other.

3. The thermal type flowmeter (102) according to claim 1 or 2, further comprising:
a temperature sensor (6) configured to detect an ambient temperature of the sensor element (10); and
a correction unit (24) configured to correct the referential relationship based on the ambient temperature of the sensor element (10), the ambient temperature of the sensor element (10) being detected by the temperature sensor (6).

4. The thermal type flowmeter (102A, 103A) according to claim 1 or 2, further comprising:
a temperature sensor (6) configured to detect an ambient temperature of the sensor element (10); and
a selector (24, 24A) configured to select a relationship corresponding to the ambient temperature of the sensor element (10) from a plurality of referential relationships to provide the corresponding relationship to the abnormality determination unit (22), the ambient temperature of the sensor element (10) being detected by the temperature sensor (6),
wherein the storage unit (20) comprises the plurality of referential relationships as the referential relationship, each of the plurality of referential relationships being correlated with the ambient temperature of the sensor element (10).

5. The thermal type flowmeter (103, 103A) according to any one of claims 1 to 4, further comprising a selector (26) configured to receive information on a type of the fluid, to select a relationship corresponding to the type of the fluid from a plurality of referential relationships, and to provide the corresponding relationship to the abnormality determination unit (22),
wherein the storage unit (20) comprises the plurality of referential relationships as the referential relationship, each of the plurality of referential relationships being correlated with the type of the fluid.

6. The thermal type flowmeter (101, 102, 102A, 103, 103A) according to any one of claims 1 to 5, wherein the abnormality determination unit (22) determines that the abnormality concerning the first and second thermo-sensitive elements exists, when the difference between the first output signal (Vu) output from the first thermo-sensitive element (1) and the first reference value is out of the predetermined acceptable range, and when the difference between the second output signal (Vd) output from the second thermo-sensitive element (3) and the second reference value is out of the predetermined acceptable range.

7. A method for determining an abnormality of a thermal type flowmeter (101, 102, 102A, 103, 103A), the thermal type flowmeter (101, 102, 102A, 103, 103A) comprising a sensor element (10) and an output circuit (11), the sensor element (10) comprising a heater (2), a first thermo-sensitive element (1), and a second thermo-sensitive element (3), the heater (2) being arranged in a flow passage in which a fluid flows to heat the fluid, the first thermo-sensitive element (1) being arranged on an upstream side of the flow passage with respect to the heater (2), the second thermo-sensitive element (3) being arranged on a downstream side of the flow passage with respect to the heater (2), the output circuit (11) outputting a signal expressing a flow rate of the fluid based on a difference between a first output signal (Vu) output from the first thermo-sensitive element (1) and a second output signal (Vd) output from the second thermo-sensitive element (3),
the method comprising the steps of:
preparing a referential relationship defining a reference of a relationship between the first output signal (Vu) and the second output signal (Vd) for determining the abnormality concerning the first and second thermo-sensitive elements by comparing a relationship between the first output signal (Vu) output from the first thermo-sensitive element and the second output signal (Vd) output from the second thermo-sensitive element to the referential relationship; and
determining whether a first difference between the first output signal (Vu) output from the first thermo-sensitive element (1) and a first reference value derived from the referential relationship is out of a first predetermined acceptable range, and/or whether a second difference between the second output signal (Vd) output from the second thermo-sensitive element (3) and a second reference value derived from the referential relationship is out of a second predetermined acceptable range; and
in case one of the first or second difference is within said one respective predetermined acceptable range, determining whether said other one of the first or second difference is out of said other respective predetermined acceptable range;
wherein determining the abnormality comprises determining that the abnormality concerning the first and second thermo-sensitive elements exists when the first difference is out of the first predetermined acceptable range and/or when the second difference is out of the second predetermined acceptable range, and
the first reference value is generated by applying the second output signal (Vd) output from the second thermo-sensitive element (3) to the referential relationship, and
the second reference value is generated by applying the first output signal (Vu) output from the first thermo-sensitive element (1) to the referential relationship.

## Patentansprüche

1. Thermischer Durchflussmesser (101, 102, 102A, 103, 103A), aufweisend:
ein Sensorelement (10), das ein Heizelement (2), ein erstes thermosensitives Element (1) und ein zweites thermosensitives Element (3) aufweist, wobei das Heizelement (2) in einem Strömungskanal angeordnet ist, in dem ein Fluid strömt, um das Fluid zu erwärmen, wobei das erste thermosensitive Element (1) an einer stromaufwärtigen Seite des Strömungskanals in Bezug auf das Heizelement (2) angeordnet ist, wobei das zweite thermosensitive Element (3) an einer stromabwärtigen Seite des Strömungskanals in Bezug auf das Heizelement (2) angeordnet ist;
eine Ausgabeschaltung (11), die eingerichtet ist, ein Signal auszugeben, das eine Strömungsrate des Fluids auf der Grundlage einer Differenz zwischen einem ersten Ausgangssignal (Vu), das von dem ersten thermosensitiven Element (1) ausgegeben wird, und einem zweiten Ausgangssignal (Vd), das von dem zweiten thermosensitiven Element (3) ausgegeben wird, ausdrückt;
eine Speichereinheit (20), in der eine Referenzbeziehung vorab gespeichert ist, wobei die Referenzbeziehung eine Referenz einer Beziehung zwischen dem ersten Ausgangssignal (Vu) und dem zweiten Ausgangssignal (Vd) definiert; und
eine Abnormalitätsbestimmungseinheit (22), die eingerichtet ist, eine Abnormalität bezüglich des ersten und des zweiten thermosensitiven Elements zu bestimmen, indem eine Beziehung zwischen dem ersten Ausgangssignal (Vu), das von dem ersten thermosensitiven Element (1) ausgegeben wird, und dem zweiten Ausgangssignal (Vd), das von dem zweiten thermosensitiven Element (3) ausgegeben wird, mit der Referenzbeziehung verglichen wird;
wobei die Abnormalitätsbestimmungseinheit (22) eingerichtet ist, zu bestimmen, ob eine erste Differenz zwischen dem ersten Ausgangssignal (Vu), das von dem ersten thermosensitiven Element (1) ausgegeben wird, und einem ersten Referenzwert, der aus der Referenzbeziehung abgeleitet wird, außerhalb eines ersten vorbestimmten akzeptablen Bereichs liegt und/oder ob eine zweite Differenz zwischen dem zweiten Ausgangssignal (Vd), das von dem zweiten thermosensitiven Element (3) ausgegeben wird, und einem zweiten Referenzwert, der aus der Referenzbeziehung abgeleitet wird, außerhalb eines zweiten vorbestimmten akzeptablen Bereichs liegt, und
wobei die Abnormalitätsbestimmungseinheit (22) eingerichtet ist, für den Fall, dass eine der ersten oder der zweiten Differenz innerhalb des einen jeweiligen vorbestimmten akzeptablen Bereichs liegt, zu bestimmen, ob die andere der ersten oder der zweiten Differenz außerhalb des anderen jeweiligen vorbestimmten akzeptablen Bereichs liegt,
wobei die Abnormalitätsbestimmungseinheit (22) bestimmt, dass die Abnormalität bezüglich des ersten und zweiten thermosensitiven Elements existiert, wenn die erste Differenz außerhalb des ersten vorbestimmten akzeptablen Bereichs liegt und/oder wenn die zweite Differenz außerhalb des zweiten vorbestimmten akzeptablen Bereichs liegt, und
wobei die Abnormalitätsbestimmungseinheit (22) den ersten Referenzwert erzeugt, indem sie das zweite Ausgangssignal (Vd), das von dem zweiten thermosensitiven Element (3) ausgegeben wird, auf die Referenzbeziehung anwendet, und
die Abnormalitätsbestimmungseinheit (22) den zweiten Referenzwert erzeugt, indem sie das erste Ausgangssignal (Vu), das von dem ersten thermosensitiven Element (1) ausgegeben wird, auf die Referenzbeziehung anwendet.

2. Thermischer Durchflussmesser (101, 102, 102A, 103, 103A) nach Anspruch 1, wobei die Referenzbeziehung in der Speichereinheit (20) als eine von einer durch das erste Ausgangssignal (Vu) und das zweite Ausgangssignal (Vd) definierten Karte, einer durch das erste Ausgangssignal (Vu) und das zweite Ausgangssignal (Vd) definierten Tabelle, oder einer Funktion, die eines von dem ersten Ausgangssignal (Vu) und dem zweiten Ausgangssignal (Vd) von dem anderen ableitet, gespeichert ist.

3. Thermischer Durchflussmesser (102) nach Anspruch 1 oder 2, ferner aufweisend:
einen Temperatursensor (6), der eingerichtet ist, eine Umgebungstemperatur des Sensorelements (10) zu erfassen; und
eine Korrektureinheit (24), die eingerichtet ist, die Referenzbeziehung auf der Grundlage der Umgebungstemperatur des Sensorelements (10) zu korrigieren, wobei die Umgebungstemperatur des Sensorelements (10) durch den Temperatursensor (6) erfasst wird.

4. Thermische Durchflussmesser (102A, 103A) nach Anspruch 1 oder 2, ferner aufweisend:
einen Temperatursensor (6), der eingerichtet ist, eine Umgebungstemperatur des Sensorelements (10) zu erfassen; und
einen Selektor (24, 24A), der eingerichtet ist, eine Beziehung, die der Umgebungstemperatur des Sensorelements (10) entspricht, aus einer Vielzahl von Referenzbeziehungen auszuwählen, um die entsprechende Beziehung für die Anomalitätsbestimmungseinheit (22) bereitzustellen, wobei die Umgebungstemperatur des Sensorelements (10) von dem Temperatursensor (6) erfasst wird,
wobei die Speichereinheit (20) die Vielzahl von Referenzbeziehungen als die Referenzbeziehung umfasst, wobei jede der Vielzahl von Referenzbeziehungen mit der Umgebungstemperatur des Sensorelements (10) korreliert ist.

5. Thermischer Durchflussmesser (103, 103A) nach einem der Ansprüche 1 bis 4, der ferner einen Selektor (26) aufweist, der eingerichtet ist, Informationen über einen Typ des Fluids zu empfangen, eine Beziehung, die dem Typ des Fluids entspricht, aus einer Vielzahl von Referenzbeziehungen auszuwählen und die entsprechende Beziehung an die Anomalitätsbestimmungseinheit (22) bereitzustellen,
wobei die Speichereinheit (20) die Vielzahl von Referenzbeziehungen als die Referenzbeziehung aufweist, wobei jede der Vielzahl von Referenzbeziehungen mit dem Typ des Fluids korreliert ist.

6. Thermischer Durchflussmesser (101, 102, 102A, 103, 103A) nach einem der Ansprüche 1 bis 5, wobei die Abnormalitätsbestimmungseinheit (22) bestimmt, dass die Abnormalität bezüglich des ersten und zweiten thermosensitiven Elements vorliegt, wenn die Differenz zwischen dem ersten Ausgangssignal (Vu), das von dem ersten thermosensitiven Element (1) ausgegeben wird, und dem ersten Referenzwert außerhalb des vorbestimmten akzeptablen Bereichs liegt, und wenn die Differenz zwischen dem zweiten Ausgangssignal (Vd), das von dem zweiten thermosensitiven Element (3) ausgegeben wird, und dem zweiten Referenzwert außerhalb des vorbestimmten akzeptablen Bereichs liegt.

7. Verfahren zum Bestimmen einer Abnormalität eines thermischen Durchflussmessers (101, 102, 102A, 103, 103A), wobei der thermische Durchflussmesser (101, 102, 102A, 103, 103A) aufweist, ein Sensorelement (10) und eine Ausgangsschaltung (11), wobei das Sensorelement (10) ein Heizelement (2), ein erstes thermosensitives Element (1) und ein zweites thermosensitives Element (3) aufweist, wobei das Heizelement (2) in einem Strömungskanal angeordnet ist, in dem ein Fluid strömt, um das Fluid zu erwärmen, wobei das erste thermosensitive Element (1) auf einer stromaufwärtigen Seite des Strömungskanals in Bezug auf das Heizelement (2) angeordnet ist, wobei das zweite thermosensitive Element (3) auf einer stromabwärtigen Seite des Strömungskanals in Bezug auf das Heizelement (2) angeordnet ist, die Ausgangsschaltung (11) ein Signal ausgibt, das eine Strömungsrate des Fluids auf der Grundlage einer Differenz zwischen einem ersten Ausgangssignal (Vu), das von dem ersten thermosensitiven Element (1) ausgegeben wird, und einem zweiten Ausgangssignal (Vd), das von dem zweiten thermosensitiven Element (3) ausgegeben wird, ausdrückt,
wobei das Verfahren die folgenden Schritte aufweist:
Erstellen einer Referenzbeziehung, die eine Referenz einer Beziehung zwischen dem ersten Ausgangssignal (Vu) und dem zweiten Ausgangssignal (Vd) definiert, zum Bestimmen der Abnormalität bezüglich des ersten und des zweiten thermosensitiven Elements durch Vergleichen einer Beziehung zwischen dem ersten Ausgangssignal (Vu), das von dem ersten thermosensitiven Element ausgegeben wird, und dem zweiten Ausgangssignal (Vd), das von dem zweiten thermosensitiven Element ausgegeben wird, mit der Referenzbeziehung;
und
Bestimmen, ob eine erste Differenz zwischen dem ersten Ausgangssignal (Vu), das von dem ersten thermosensitiven Element (1) ausgegeben wird, und einem ersten Referenzwert, der von der Referenzbeziehung abgeleitet wird, außerhalb eines ersten vorbestimmten akzeptablen Bereichs liegt, und/oder ob eine zweite Differenz zwischen dem zweiten Ausgangssignal (Vd), das von dem zweiten thermosensitiven Element (3) ausgegeben wird, und einem zweiten Referenzwert, der von der Referenzbeziehung abgeleitet wird, außerhalb eines zweiten vorbestimmten akzeptablen Bereichs liegt; und
für den Fall, dass eine der ersten oder der zweiten Differenz innerhalb des einen jeweiligen vorbestimmten akzeptablen Bereichs liegt, Bestimmen, ob die andere der ersten oder der zweiten Differenz außerhalb des anderen jeweiligen vorbestimmten akzeptablen Bereichs liegt;
wobei das Bestimmen der Abnormalität das Bestimmen umfasst, dass die Abnormalität bezüglich des ersten und zweiten thermosensitiven Elements existiert, wenn die erste Differenz außerhalb des ersten vorbestimmten akzeptablen Bereichs liegt und/oder wenn die zweite Differenz außerhalb des zweiten vorbestimmten akzeptablen Bereichs liegt, und
der erste Referenzwert durch Anwenden des zweiten Ausgangssignals (Vd), das von dem zweiten thermosensitiven Element (3) ausgegeben wird, auf die Referenzbeziehung erzeugt wird, und
der zweite Referenzwert durch Anwenden des ersten Ausgangssignals (Vu), das von dem ersten thermosensitiven Element (1) ausgegeben wird, auf die Referenzbeziehung erzeugt wird.

## Revendications

1. Débitmètre de type thermique (101, 102, 102A, 103, 103A) comprenant :
un élément capteur (10) comprenant un élément chauffant (2), un premier élément thermosensible (1) et un second élément thermosensible (3), l'élément chauffant (2) étant agencé dans un passage d'écoulement dans lequel un fluide s'écoule pour chauffer le fluide, le premier élément thermosensible (1) étant agencé sur un côté amont du passage d'écoulement par rapport à l'élément chauffant (2), le second élément thermosensible (3) étant agencé sur un côté aval du passage d'écoulement par rapport à l'élément chauffant (2) ;
un circuit de sortie (11) conçu pour délivrer en sortie un signal exprimant un débit du fluide sur la base d'une différence entre un premier signal de sortie (Vu) fourni par le premier élément thermosensible (1) et un second signal de sortie (Vd) fourni par le second élément thermosensible (3) ;
une unité de stockage (20) dans laquelle une relation référentielle est préalablement stockée, la relation préférentielle définissant une référence d'une relation entre le premier signal de sortie (Vu) et le second signal de sortie (Vd) ; et
une unité de détermination d'anomalie (22) conçue pour déterminer une anomalie concernant les premier et second éléments thermosensibles en comparant une relation entre le premier signal de sortie (Vu) fourni par le premier élément thermosensible (1) et le second signal de sortie (Vd) fourni par le second élément thermosensible (3) à la relation référentielle ;
dans lequel l'unité de détermination d'anomalie (22) est conçue pour déterminer si une première différence entre le premier signal de sortie (Vu) fourni par le premier élément thermosensible (1) et une première valeur de référence dérivée de la relation référentielle est en dehors d'une première plage acceptable prédéterminée et/ou si une seconde différence entre le second signal de sortie (Vd) fourni par le second élément thermosensible (3) et une seconde valeur de référence dérivée de la relation référentielle est en dehors d'une seconde plage acceptable prédéterminée, et
dans lequel l'unité de détermination d'anomalie (22) est conçue pour déterminer, dans le cas où l'une parmi la première ou seconde différence est dans ladite une plage acceptable prédéterminée respective, si ladite autre parmi la première ou seconde différence est en dehors de ladite autre plage acceptable prédéterminée respective,
dans lequel l'unité de détermination d'anomalie (22) détermine que l'anomalie concernant les premier et second éléments thermosensibles existe lorsque la première différence est en dehors de la première plage acceptable prédéterminée et/ou lorsque la seconde différence est en dehors de la seconde plage acceptable prédéterminée, et
dans lequel l'unité de détermination d'anomalie (22) génère la première valeur de référence en appliquant le second signal de sortie (Vd) fourni par le second élément thermosensible (3) à la relation référentielle, et
l'unité de détermination d'anomalie (22) génère la seconde valeur de référence en appliquant le premier signal de sortie (Vu) fourni par le premier élément thermosensible (1) à la relation référentielle.

2. Débitmètre de type thermique (101, 102, 102A, 103, 103A) selon la revendication 1, dans lequel la relation référentielle est stockée dans l'unité de stockage (20) en tant que l'une parmi une carte définie par le premier signal de sortie (Vu) et le second signal de sortie (Vd), un tableau défini par le premier signal de sortie (Vu) et le second signal de sortie (Vd), et une fonction dérivant l'un parmi le premier signal de sortie (Vu) et le second signal de sortie (Vd) de l'autre.

3. Débitmètre de type thermique (102) selon la revendication 1 ou 2, comprenant en outre :
un capteur de température (6) conçu pour détecter une température ambiante de l'élément capteur (10) ; et
une unité de correction (24) conçue pour corriger la relation référentielle sur la base de la température ambiante de l'élément capteur (10), la température ambiante de l'élément capteur (10) étant détectée par le capteur de température (6).

4. Débitmètre de type thermique (102A, 103A) selon la revendication 1 ou 2, comprenant en outre :
un capteur de température (6) conçu pour détecter une température ambiante de l'élément capteur (10) ; et
un sélecteur (24, 24A) conçu pour sélectionner une relation correspondant à la température ambiante de l'élément capteur (10) parmi une pluralité de relations référentielles pour fournir la relation correspondante à l'unité de détermination d'anomalie (22), la température ambiante de l'élément capteur (10) étant détectée par le capteur de température (6),
dans lequel l'unité de stockage (20) comprend la pluralité de relations référentielles en tant que relation référentielle, chacune de la pluralité de relations référentielles étant corrélée avec la température ambiante de l'élément capteur (10).

5. Débitmètre de type thermique (103, 103A) selon l'une quelconque des revendications 1 à 4, comprenant en outre un sélecteur (26) conçu pour recevoir des informations sur un type du fluide, pour sélectionner une relation correspondant au type du fluide parmi une pluralité de relations référentielles, et pour fournir la relation correspondante à l'unité de détermination d'anomalie (22),
dans lequel l'unité de stockage (20) comprend la pluralité de relations référentielles en tant que relation référentielle, chacune de la pluralité de relations référentielles étant corrélée au type du fluide.

6. Débitmètre de type thermique (101, 102, 102A, 103, 103A) selon l'une quelconque des revendications 1 à 5, dans lequel l'unité de détermination d'anomalie (22) détermine que l'anomalie concernant les premier et second éléments thermosensibles existe, lorsque la différence entre le premier signal de sortie (Vu) fourni par le premier élément thermosensible (1) et la première valeur de référence est en dehors de la plage acceptable prédéterminée, et lorsque la différence entre le second signal de sortie (Vd) fourni par le second élément thermosensible (3) et la seconde valeur de référence est en dehors de la plage acceptable prédéterminée.

7. Procédé pour déterminer une anomalie d'un débitmètre de type thermique (101, 102, 102A, 103, 103A), le débitmètre de type thermique (101, 102, 102A, 103, 103A) comprenant un élément capteur (10) et un circuit de sortie (11), l'élément capteur (10) comprenant un élément chauffant (2), un premier élément thermosensible (1) et un second élément thermosensible (3), l'élément chauffant (2) étant agencé dans un passage d'écoulement dans lequel un fluide s'écoule pour chauffer le fluide, le premier élément thermosensible (1) étant agencé sur un côté amont du passage d'écoulement par rapport à l'élément chauffant (2), le second élément thermosensible (3) étant agencé sur un côté aval du passage d'écoulement par rapport à l'élément chauffant (2), le circuit de sortie (11) délivrant en sortie un signal exprimant un débit du fluide sur la base d'une différence entre un premier signal de sortie (Vu) fourni par le premier élément thermosensible (1) et un second signal de sortie (Vd) fourni par le second élément thermosensible (3),
le procédé comprenant les étapes consistant à :
préparer une relation référentielle définissant une référence d'une relation entre le premier signal de sortie (Vu) et le second signal de sortie (Vd) pour déterminer l'anomalie concernant les premier et second éléments thermosensibles en comparant une relation entre le premier signal de sortie (Vu) fourni par le premier élément thermosensible et le second signal de sortie (Vd) fourni par le second élément thermosensible à la relation référentielle ; et
déterminer si une première différence entre le premier signal de sortie (Vu) fourni par le premier élément thermosensible (1) et une première valeur de référence dérivée de la relation référentielle est en dehors d'une première plage acceptable prédéterminée, et/ou si une seconde différence entre le second signal de sortie (Vd) fourni par le second élément thermosensible (3) et une seconde valeur de référence dérivée de la relation référentielle est en dehors d'une seconde plage acceptable prédéterminée ; et
dans le cas où l'une parmi la première ou seconde différence est dans ladite une plage acceptable prédéterminée respective, déterminer si ladite autre parmi la première ou seconde différence est en dehors de ladite autre plage acceptable prédéterminée respective ;
dans lequel la détermination de l'anomalie comprend la détermination que l'anomalie concernant les premier et second éléments thermosensibles existe lorsque la première différence est en dehors de la première plage acceptable prédéterminée et/ou lorsque la seconde différence est en dehors de la seconde plage acceptable prédéterminée, et
la première valeur de référence est générée en appliquant le second signal de sortie (Vd) fourni par le second élément thermosensible (3) à la relation référentielle, et
la seconde valeur de référence est générée en appliquant le premier signal de sortie (Vu) fourni par le premier élément thermosensible (1) à la relation référentielle.
